# EUROPEAN PATENT SPECIFICATION

(11) **EP 1 820 711 B1**
(45) Date of publication and mention of the grant of the patent: **19.02.2014**
(21) Application number: 06003418.8
(22) Date of filing: 20.02.2006
(51) Int. Cl.: B61D 33/00, B62D 31/02

(54) **Car body for a vehicle**
Wagenkasten eines Fahrzeuges
Caisse d'un véhicule

(43) Date of publication of application: 22.08.2007
(73) Proprietor: Bombardier Transportation GmbH, 10785 Berlin (DE)
(72) Inventor: Ridremont, Sébastian, 7090 Brain-Le-Comte (BE); Coppens, Luc, 1410 Waterloo (BE); Szyndler, Jacques, 7000 Mons (BE)
(74) Representative: Cohausz & Florack

(56) References cited:
- EP-A- 0 118 116
- EP-A- 0 628 468
- GB-A- 733 622
- US-A- 4 283 086

## Description

The invention relates to a car body for a vehicle, in particular a rail vehicle, comprising a transport compartment having a longitudinal axis, an underframe structure forming a bottom of the transport compartment, a first side wall structure forming a first side wall of the transport compartment, and a first load bearing device forming part of the first side wall structure and being adapted to bear the loads introduced via a first carrier structure arranged within the transport compartment.

In typical passenger transport vehicles, such as passenger trains etc., comprising a car body with transport compartment as outlined above, the first carrier structure is a support for one or more rows of passenger seats. Examples of such car bodies are known e.g. from EP 0 628 468 B1 disclosing a passenger seat mounting arrangement where the carrier structure is mounted to a load bearing device in the form of a console arranged within the side wall structure. The console, in turn, is rigidly connected to a torsion rigid lateral longitudinal beam of the underframe structure of the car body in order to introduce the static and dynamic loads resulting from the passenger seat structure and the passengers into the underframe structure.

One disadvantage of this solution is that a relatively high manufacturing effort is necessary for mounting the console to the lateral longitudinal beam due to the relatively high stresses produced in this area. In turn, this deficiency causes a strict limitation of the load that may be introduced into the console. Typically, a maximum of two passenger seats per row is feasible.

If more than two passenger seats per row are required, with the known designs, typically, at least one additional support element remote from the side wall structure is necessary to take the static and dynamic loads of a fully occupied passenger seat arrangement of this type. Such a further support may be a strut element or the like connecting the passenger seat arrangement to the underframe structure and/or the roof structure of the car body. In each case, the additional support element increases the manufacturing effort. Furthermore, in the case of an additional support element cooperating with the underframe structure, the additional support element complicates cleaning of the floor of the transport compartment.

It is thus an object of the invention to provide a car body that, at least to some extent, overcomes the above disadvantages. It is a further object of the invention to provide a car body that provides improved load bearing properties of the load bearing device at reduced manufacturing effort.

The above objects are achieved starting from a car body according to the preamble of claim 1 by the features of the characterizing part of claim 1,

The invention is based on the technical teaching that improved load bearing properties of the load bearing device at reduced manufacturing effort may be achieved by providing in a generic car body wherein first load bearing device extends into the underframe structure of the car body. This improves the introduction of the static and dynamic loads introduced via the first carrier structure into the underframe structure. Furthermore, the interface locations of the load bearing device with the underframe structure may be either shifted to locations where less critical stress conditions prevail or have a lager interface area such that the stress level is reduced.

Thus, according to the invention, the first load bearing device comprises at least one angled traverse, the angled traverse, in a transverse plane extending transverse to the longitudinal axis, extending within the underframe structure and within the first side wall structure. The angled traverse, on the one hand, may be easily mounted to the underframe structure at a location remote from the transition between the side wall structure and the underframe structure, where less critical stress conditions prevail. Furthermore, the part of the traverse extending within the underframe structure provides a large interface area to the underframe structure which, in turn, leads to a reduced stress level at the interface area to the underframe structure.

The first load bearing device may comprise at least a part of the first carrier structure. For example the first load bearing device may already comprise a carrier beam to which passenger seats or other load carrying structures may be mounted. Preferably, the first load bearing device comprises a first interface for the first carrier structure. This allows to mount the first carrier structure at a later point in time, thus facilitating overall manufacture and assembly of the bottom and side wall structure of the car body.

The first interface may be located at any desired and suitable height level above the bottom level defined by the bottom of the transport compartment. In particular, it may even reach down to the bottom level of the transport compartment. Preferably, the first interface is located above the bottom level. This has the advantage that cleaning of the bottom is not hindered by the connection between the load carrying structure and the load bearing device even at locations immediately adjacent to the side wall.

Preferably, the first traverse part of the traverse extending within the first side wall structure extends up to a certain level above the bottom level. To this end, the first traverse part has a first end located above the bottom level. The first traverse part mav even reach up to a roof level defined by a roof structure forming a roof of the transport compartment. However, it is preferred that the first end of the first traverse part is located below the roof level. This is due to the easier handling of the traverse during manufacture and assembly.

The first traverse part, in the height direction of the transport compartment, may reach beyond the interface of the first load bearing device for the first carrier structure. Preferably, the first end of the first traverse part is located in the area of the first interface. Thus, the dimension of the first traverse part, in the height direction of the transport compartment, is limited to the necessary amount reducing the effort for the traverse.

According to the invention, the first carrier structure is removably connected to the first load bearing device, the first load bearing device forming the single support to the first carrier structure. Thus, the overall assembly effort for the car body is reduced.

The first carrier structure may be of any desired and suitable type. Preferably, the first carrier structure comprises at least one first carrier beam connected to the first load bearing device. Such a carrier beam may serve as a basis for exchangeably mounting different components of such a carrier structure.

The first carrier structure is a passenger seat structure mounted to the first carrier structure. Preferably, the passenger seat structure comprises at least three passenger seats in a row, in particular at least six seats in two rows.

According to the invention the traverse is a monolithic element leading to good load bearing properties and simple manufacture of the traverse.

The traverse may be of any suitable design. Preferably, the traverse comprises at least one substantially planar web element, the web element extending substantially parallel to the transverse plane. This very simple design leads to very good load bearing properties in the transverse plane and simple manufacture of the traverse.

With advantageous embodiments of the car body according to the invention, the traverse comprises at least one substantially planar ridge element, the ridge element being connected to the web element and extending transverse to the web element. This improves the load bearing capacity of the traverse in the longitudinal direction of the transport compartment.

With preferred embodiments of the car body according to the invention, the at least one ridge element forms a support for a floor structure of the underframe structure or for a lower shell structure of the underframe structure. Thus, a large interface area between the traverse and the underframe structure may achieved which also integrates the function of supporting a further structure of the underframe structure.

With further advantageous embodiments of the car body according to the invention, the traverse comprises at two or more substantially planar web elements, the planar web elements being spaced along the longitudinal axis. Thus, a high load bearing capacity of the traverse may be achieved. These planar web elements may be connected in any suitable way. Preferably, the planar web elements are connected at least in the area of the first interface.

The traverse may be integrated into the structure of the car body in any suitable way. Preferably, the first side wall structure comprises at least one shell structure, the shell structure forming a surface of the first side wall structure and being mounted to the traverse. Thus, lightweight and rigid side wall structure with excellent load bearing properties may be achieved. The shell structure may be either an inner or an outer shell of the side wall. Preferably, both, the inner shell and the outer shell of the side wall, are connected to the traverse.

With advantageous embodiments of the car body according to the invention, the transport compartment has a transverse axis extending transverse to the longitudinal axis and the underframe structure comprises an elongated longitudinal support structure. The longitudinal support structure extends substantially parallel to the longitudinal axis and is spaced from the first side wall structure along the transverse axis. The first load bearing device is connected to the longitudinal support structure. Thus, a fishbone-like structure may be achieved that allows for easy assembly and high rigidity. In particular, at the connection between the first load bearing device and the longitudinal support structure, due to the distance from the transition between the side wall structure and the underframe structure, a less critical stress situation with reduced bending moments prevails.

The longitudinal support structure may be of any suitable design. Preferably, the longitudinal support structure comprises at least one longitudinal beam providing good load bearing properties in a very simple way. The longitudinal support structure may be arbitrarily arranged within the underframe structure. Preferably, the transport compartment has a central longitudinal plane and the longitudinal support structure extends within the central longitudinal plane.

The traverse may be connected to the longitudinal support structure in any suitable way, e.g. by a frictional connection, an interlocking connection, an adhesive connection, a material connection or any combination thereof. Preferably, the traverse comprises at least one substantially planar web element, the web element extending substantially parallel to the transverse plane and being received within a recess of the longitudinal support structure. Thus, a simple and reliable interlocking connection may be achieved.

The traverse may end at the longitudinal support structure. However, with advantageous embodiments of the car body according to the invention, the traverse, along the transverse axis, extends on both sides of the longitudinal support structure. Thus, a very stable structure may be obtained.

With preferred embodiments of the car body according to the invention either the first load bearing device or an adjacent second load bearing device extends into an adjacent second side wall structure of the car body. Thus, a very stable skeleton-like arrangement may be obtained. Thus, preferably, the first load bearing device extending within the second side wall structure and being adapted to bear the loads introduced via a second carrier structure arranged within the transport compartment. As an alternative, a second load bearing device is provided adjacent to the first load bearing device and extending within the second side wall structure, the second load bearing device being adapted to bear the loads introduced via a second carrier structure arranged within the transport compartment.

Preferably, an arrangement that is symmetric to the central longitudinal plane of the car body is provided. Thus, for example, either the first load bearing device is of a design that is symmetric to the central longitudinal plane or the first load bearing device and the second load bearing device are arranged and adapted such that they are symmetric to the central longitudinal plane. This leads to good load bearing properties as well as reduced manufacturing and assembly effort.

Preferably, a plurality of first load bearing devices and, eventually, a plurality of second load bearing devices is provided, the first load bearing devices as well as the second load bearing devices being mutually spaced apart along said longitudinal axis. Thus, the stable skeleton-like arrangement mentioned above is obtained.

The invention further relates to a load bearing device for a car body of a vehicle, in particular a rail vehicle, that has the features of a first load bearing device as they have been outlined above in the context of the car body according to the invention. With such a load bearing device, the advantages and embodiments described above may be realized to the same extent. Thus, it is here only referred to the explanations given above.

The invention further relates to a vehicle, in particular a rail vehicle, comprising a car body according to the invention. With such a vehicle, the advantages and embodiments described above may be realized to the same extent. Thus, again, it is here only referred to the explanations given above.

Further embodiments of the invention will become apparent from the dependent claims and the following description of preferred embodiments which refers to the appended figures.
- Figure 1: is a schematic perspective view of a part of a preferred embodiment of the vehicle according to the invention comprising a preferred embodiment of the car body according to the invention;
- Figure 2: is a schematic perspective view of a part of the vehicle of Figure 1 with a mounted carrier beam;
- Figure 3: is a schematic perspective view of a part of the vehicle of Figure 1 with a mounted passenger seat arrangement;
- Figure 4: is a schematic perspective view of a part of a further preferred embodiment of the vehicle according to the invention comprising a further preferred embodiment of the car body according to the invention;
- Figure 5: is a schematic perspective view of a part of the vehicle of Figure 4 with a mounted passenger seat arrangement;
- Figure 6: is a schematic perspective view of a part of a further preferred embodiment of the vehicle according to the invention comprising a further preferred embodiment of the car body according to the invention;
- Figure 7: is a schematic partially sectional view of a part of the vehicle of Figure 6 with a mounted passenger seat arrangement;
- Figures 8A to 8F: are schematic partially sectional views of parts of further preferred embodiments of the vehicle according to the invention.

### First embodiment

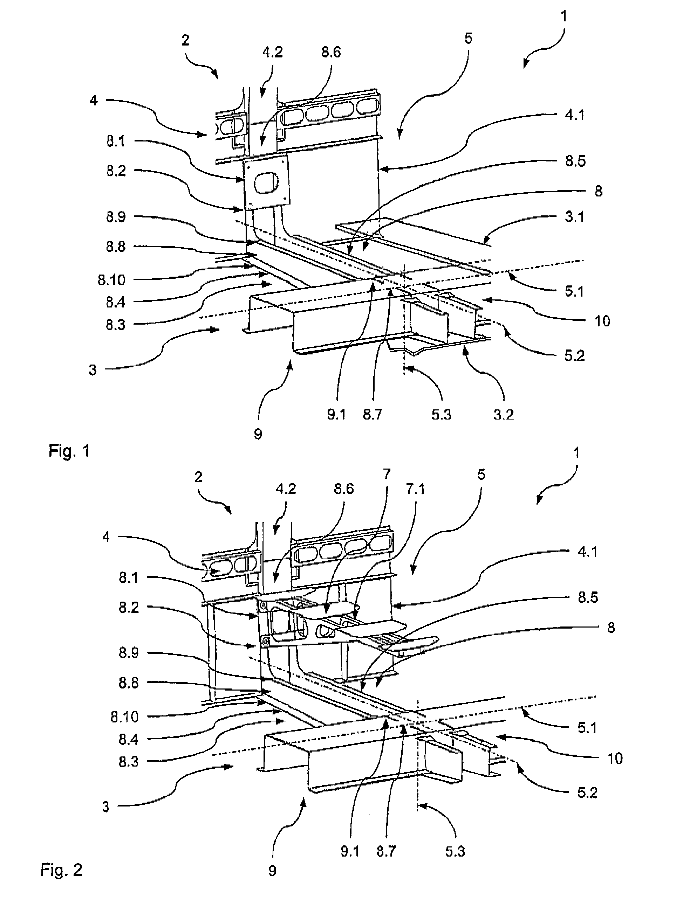

With reference to Figures 1 to 3 a first preferred embodiment of a rail vehicle 1 according to the invention with a car body 2 according to the invention will now be described in greater detail. Figures 1 to 3 are schematic perspective views of a part of the rail vehicle 1 at different assembly states.

The car body 2 comprises an underframe structure 3 and an adjacent first side wall structure 4. The underframe structure 3 and an adjacent side wall structure 4 - together with a further side wall structure, two end wall structures and a roof structure (all not shown in Figures 1 to 3) - define the body-shell of a transport compartment in the form of a passenger compartment 5 of the vehicle 1. The underframe structure 3 hereby defines a bottom of the transport compartment 5 while the first side wall structure 4 defines a side wall of the vehicle.

The car body 2, typically, is supported on two running gears (not shown). The passenger compartment 5 has an orthogonal axis system comprising a longitudinal axis 5.1 generally extending in the direction of travel of the vehicle 1, a transverse axis 5.2 extending transverse to the longitudinal axis 5.1 as well as a height axis 5.3 extending transverse to the longitudinal axis 5.1 as well.

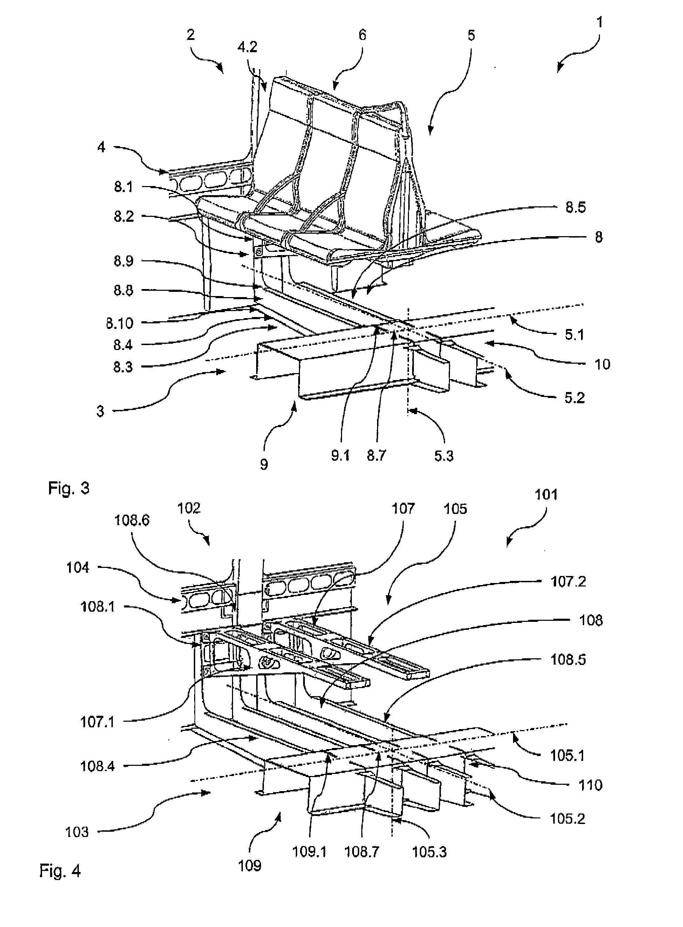

To offer seating facilities to passengers traveling within the passenger compartment 5, a passenger seat arrangement 6 (see Figure 3) is removably mounted to the structure of the car body 2. The passenger seat arrangement 6 comprises six passenger seats in two rows arranged back to back.

The passenger seat arrangement 6 is mounted to a first carrier beam 7.1 of a first carrier structure 7 (see Figure 2). The first carrier beam 7.1 forms the only support to the passenger seat arrangement 6. To this end, the first carrier beam 7.1 is mounted to a load bearing device 8 via a first mechanical interface in the form of an interface plate 8.1 of the load bearing device 8. The load bearing device 8 introduces the loads of the first carrier structure 7 and the passenger seat arrangement 6 into the structure of the car body 2.

In order be able to bear the static and dynamic loads introduced into the structure of the car body 2 via a fully occupied passenger seat arrangement 6, the load bearing device 8 has an angled shape with a first arm 8.2 and a second arm 8.3. While the first arm 8.2 extends within the first side wall structure 4, the second arm 8.3 extends within the underframe structure 3. Thus, the load bearing device 8 extends, both, within the first side wall structure 4 and the underframe structure 3, leading to a better and more even distribution of the loads into the first side wall structure 4 and the underframe structure 3 as with the known solutions.

As a consequence of these improved load bearing properties, higher loads may be introduced via the carrier structure 7. This makes it possible to support seat arrangements 6 with more than two seats in a rows without the need to introduce further support elements in the area of the free end of the carrier structure 7. This, on the one hand, reduces the manufacturing and assembly effort. On the other hand, the floor 3.1 located on top of the underframe structure 3 may remain unobstructed in the area under the seat arrangement 6 such that cleaning of the floor 3.1 is greatly facilitated.

The load bearing device 8 comprises a monolithic first angled traverse 8.4 and a monolithic second angled traverse 8.5. The first angled traverse 8.4 and a monolithic second angled traverse 8.5 are spaced apart along the longitudinal axis 5.1. At the first end 8.6 of the load bearing device 8, the first traverse 8.4 and the second traverse 8.5 are connected via the interface plate 8.1. At the second end 8.7 of the load bearing device 8, the first traverse 8.4 and the second traverse 8.5 are connected via a longitudinal support structure in the form of a longitudinal beam 9 of substantially U-shaped cross section.

The first traverse 8.4 and the second traverse 8.5 are arranged to be mirror symmetric to a plane perpendicular to the longitudinal axis 5.1. Thus, in the following, only the first traverse 8.4 will be described in greater detail.

The first traverse 8.4 comprises a planar web element 8.8 extending in a transverse plane that is substantially perpendicular to the longitudinal axis 5.1, In its plane of extension, the web element 8.8 defines the angled shape of the first traverse 8.4. In the area of the underframe structure 3, planar ridge elements 8.9 and 8.10 are formed at the periphery of the web element 8.8. The planar ridge elements 8.9 and 8.10 extend perpendicular to the web element 8.8. Thus, on the one hand, they enhance stability of the first traverse 8.4. On the other hand, they serve to enlarge the support and mounting surface for the floor 3.1 and the lower shell 32 of the underframe structure 3 which, in turn, improves the introduction of loads into the underframe structure 3.

Furthermore, the outer shell 4.1 of the side wall structure 4 is also mounted to the respective traverse 8.4 and 8.5 leading to a favorable introduction of loads into the side wall structure 4.

The monolithic design of the first traverse 8.4 in the critical area of the transition between the first side wall structure 4 and the underframe structure 3, in a very simple manner, provides improved load bearing properties compared to the known solutions where a connection between separate parts is provided in this critical area.

The first traverse 8.2 and the second traverse 8.3 reach up to the upper edge of the interface plate 8.1. Thus, the first end 8.6 of the load bearing device 8 with the interface plate 8.1 is located at a level above the bottom level of the underframe structure 3 which is defined by the upper surface of the floor 3.1.

The first end 8.6 of the load bearing device 8 is located below a roof level defined by the roof structure (not shown) of the car body 2 leading to an easy handling of the load bearing device 8 during manufacture and assembly. A rib 4.2 of the side wall structure 4 is aligned with the load bearing device 8 and continues the load bearing device 8 such that a continuous stiffening structure is formed over the entire height of the car body 2. However, it will be appreciated that, with other embodiments of the invention, the load bearing device 8 may reach up further, even up to roof level of the car body.

The first traverse 8.2 and the second traverse 8.3 as well as the longitudinal beam 9 are made of cold formed sheet metal. At the second end 8.7, the web element 8.8 of the first traverse 8.2 reaches into a slot 9.1 formed within the longitudinal beam 9. Thus, a favorable interlocking connection is achieved between the longitudinal beam 9 and the load bearing device 8 which is combined with a welded connection. At the first end 8.6, the first traverse 8.2 and the second traverse 8.3 are welded to the back side of the interface plate 8.1. The carrier beam 7.1, in turn, is removably mounted to the interface plate 8.1 via four screw connections.

However, it will be appreciated that, with other embodiments of the invention, any other suitable type of connection or combination of connections may be selected for connecting the respective components of the car body structure.

The longitudinal beam 9 extends parallel to the longitudinal axis 5.1 and is located at the central longitudinal plane of the car body 2 which is defined by the longitudinal axis 5.1 and the height axis 5.3. At the other side of the longitudinal beam 9, adjacent to the first load bearing device 8, a second load bearing device 10 is provided.

The first load bearing device 8 and the second load bearing device 10 are arranged to be mirror symmetric with respect to the central longitudinal plane of the car body 2. Thus, all details outlined above with respect to the first load bearing device 8 also apply to the second load bearing device 10. In particular, the second load bearing device 10 similarly extends within and is connected to the underframe structure 3 and the second side wall structure (not shown).

It will be appreciated that the car body 2 comprises a plurality of first load bearing devices 8 and second load bearing devices 10 which are mutually spaced apart along the longitudinal axis 5.1. Thus, the first load bearing devices 8 and second load bearing devices 10, together with the longitudinal beam 9 form a rigid and stable fishbone-like skeleton.

### Second embodiment

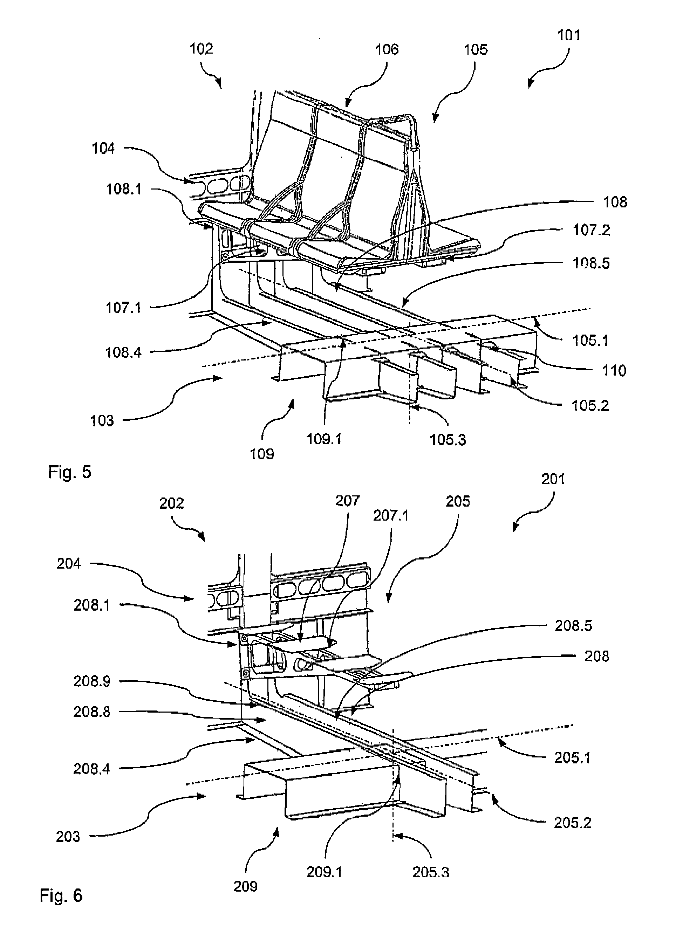

In the following, a second preferred embodiment of a rail vehicle 101 according to the invention with a car body 102 according to the invention will be described in greater detail with reference to Figure 4 and 5. Figures 4 and 5 are schematic perspective views of a part of the rail vehicle 101 at different assembly states.

The car body 102, in its principal design and functionality, largely corresponds to the car body 2 of Figures 1 to 3. Thus, it will here be mainly referred to the differences only. Furthermore, like parts have been designated with reference numerals raised by 100.

Thus, again, the car body 102 comprises an underframe structure 103 and an adjacent first side wall structure 104, together with other structures (not shown), defining the body-shell of a transport compartment in the form of a passenger compartment 105 of the vehicle 101.

The car body 102 is again supported on two running gears (not shown). The passenger compartment 105 also has an orthogonal axis system comprising a longitudinal axis 105.1 generally extending in the direction of travel of the vehicle 101, a transverse axis 105.2 extending transverse to the longitudinal axis 105.1 as well as a height axis 105.3 extending transverse to the longitudinal axis 105.1 as well.

To offer seating facilities to passengers traveling within the passenger compartment 105, a passenger seat arrangement 106 (see Figure 5) is removably mounted to the structure of the car body 102. The passenger seat arrangement 106 comprises six passenger seats in two rows arranged back to back.

The only difference with respect to the car body 2 of Figures 1 to 3 lies within the design of the load bearing device 108 and the carrier structure 107. The load bearing device 108 comprises four angled traverses 108.4 and 108.5, namely two first traverses 108.4 and two second traverses 108.5.

The first traverses 108.4 are of identical design and shifted with respect to each other along the longitudinal axis 105.1. Furthermore, the design of the first traverse 108.4 is identical with the design of the first traverse 8.4 of Figure 1, such that, in this context, it is here referred to the above explanations. Furthermore, the arrangement of the first traverses 108.4 and the arrangement of the second traverses 108.5 are arranged to be mirror symmetric to a plane perpendicular to the longitudinal axis 105.1.

At the first end 108.6 of the load bearing device 108, the two first traverses 108.4 and the two second traverses 108.5 are connected via a respective interface plate 108.1. At the second end 108.7 of the load bearing device 108, the first traverses 108.4 and the second traverses 108.5 are connected via a longitudinal support structure in the form of a longitudinal beam 109. To this end, the traverses 108.4 and 108.5 reach into slots 109.1 within the longitudinal beam 109.

A first carrier beam 107.1 and a second carrier beam 107.2 of the carrier structure 107 (see Figure 4) are mounted to the respective interface plate 108.1. The passenger seat arrangement 106 is mounted to the carrier beams 107.1 and 107.2. The carrier beams 107.1 and 107.2 form the only support to the passenger seat arrangement 106.

By providing support to the passenger seat arrangement 106 via the two carrier beams 107.1 and 107.2 and the four angled traverses 108.4 and 108.5 either a higher load bearing capacity or a lower stress level is achieved compared to the embodiment of Figure 1.

Here again, the longitudinal beam 109 extends parallel to the longitudinal axis 105.1 and is located at the central longitudinal plane of the car body 102 which is defined by the longitudinal axis 105.1 and the height axis 105.3. At the other side of the longitudinal beam 109, adjacent to the first load bearing device 108, again, a mirror symmetric second load bearing device 110 is provided.

It will be appreciated that the car body 102 comprises a plurality of first load bearing devices 108 and second load bearing devices 110 mutually spaced apart along the longitudinal axis 105.1. Thus, again, the first load bearing devices 108 and second load bearing devices 110, together with the longitudinal beam 109 form a rigid and stable fishbone-like skeleton.

### Third embodiment

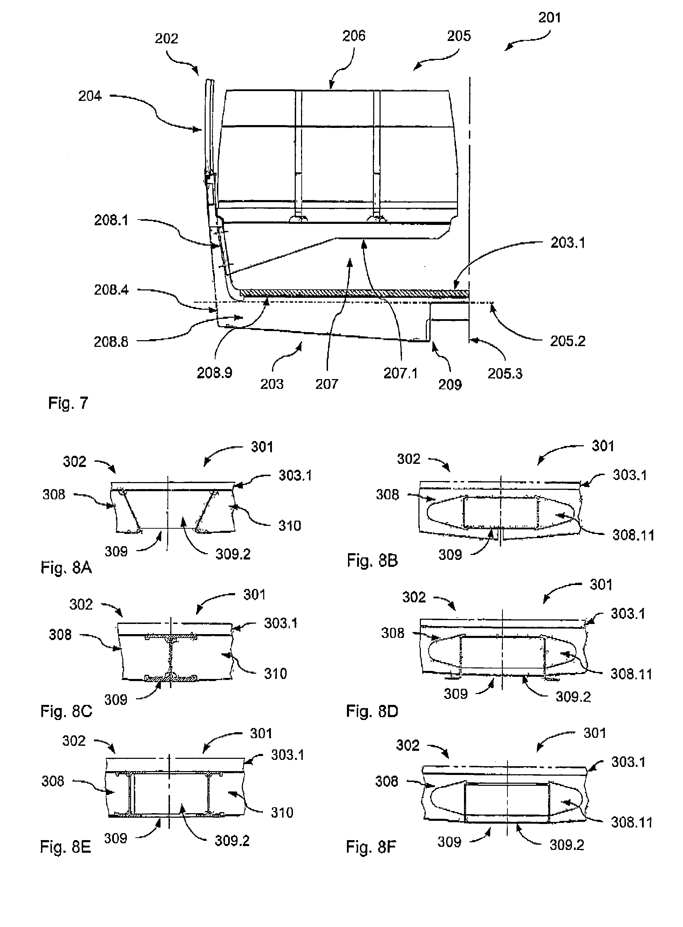

In the following, a third preferred embodiment of a rail vehicle 201 according to the invention with a car body 202 according to the invention will be described in greater detail with reference to Figures 6 and 7. Figures 6 and 7 are schematic views of a part of the rail vehicle 201 at different assembly states.

The car body 202, in its principal design and functionality, largely corresponds to the car body 2 of Figures 1 to 3. Thus, it will here be mainly referred to the differences only. Furthermore, like parts have been designated with reference numerals raised by 200.

Thus, again, the car body 202 comprises an underframe structure 203 and an adjacent first side wall structure 204, together with other structures (not shown), defining the body-shell of a transport compartment in the form of a passenger compartment 205 of the vehicle 201.

The car body 202 is again supported on two running gears (not shown). The passenger compartment 205 also has an orthogonal axis system comprising a longitudinal axis 205.1 generally extending in the direction of travel of the vehicle 201, a transverse axis 205.2 extending transverse to the longitudinal axis 205.1 as well as a height axis 205.3 extending transverse to the longitudinal axis 205.1 as well.

To offer seating facilities to passengers traveling within the passenger compartment 205, a passenger seat arrangement 206 (see Figure 7) is removably mounted to an interface plate 208.1 of a load bearing device 208 via a carrier beam 207.1 of a carrier structure 207. The passenger seat arrangement 206 comprises six passenger seats in two rows arranged back to back.

The only difference with respect to the car body 2 of Figures 1 to 3 lies within the design of the load bearing device 208. The load bearing device 208 integrates the first load bearing device 8 and the second load bearing device 10 of Figure 1. To this end, the load bearing device 208 is of mirror symmetric design with respect to the central longitudinal plane of the car body 202 which is defined by the longitudinal axis 205.1 and the height axis 205.3.

The load bearing device 208 comprises an angled first traverse 208.4 and an angled second traverse 208.5 that extend through the slots 209.1 of the longitudinal beam 209. The longitudinal beam 209 extends parallel to the longitudinal axis 205.1 and is located at the central longitudinal plane of the car body 202. The first traverse 208.4 and the second traverse 208.5 are arranged to be mirror symmetric to a plane perpendicular to the longitudinal axis 205.1.

The half of the load bearing device 208 located on one side of the central longitudinal plane of the car body 202 - apart from a slightly greater dimension of the web element 208.8 of the first traverse 208.4 in the direction of the height axis 205.3 and apart from the part interfacing with the longitudinal beam 209 - is identical with the first load bearing device 8 of Figure 1 such that, in this context, it is here referred to the above explanations.

The continuous upper ridge elements 208.9 of the first traverse 208.4 and the second traverse 208.5 are located above the level of the longitudinal beam 209. Thus they may form a continuous planar support to the floor structure 203.1 (see Figure 7) of the passenger compartment that extends over substantially the entire width of the passenger compartment 205 along the transverse axis 205.2.

By the monolithic design of the first traverse 208.4 and the second traverse 208.5 of the load bearing device 208 and their interlocking connection with the longitudinal beam 209, a highly stable structure is formed showing excellent load bearing properties.

It will be appreciated that the car body 202 comprises a plurality of load bearing devices 208 mutually spaced apart along the longitudinal axis 205.1. Thus, again, the load bearing devices 208 together with the longitudinal beam 209 form a rigid and stable fishbone-like skeleton.

### Further embodiments

In the following, further preferred embodiments a rail vehicle 301 according to the invention with a car body 302 according to the invention will be described with reference to Figures 8A to 8F. Figures 8A to 8F are schematic partially sectional views of different designs of the longitudinal beam 309.

The car body 302, in its principal design and functionality, largely corresponds to the car body 2 of Figures 1 to 3. Thus, it will here be mainly referred to the differences only. Furthermore, like parts have been designated with reference numerals raised by 300.

The only difference lies within the design of the longitudinal beam 309 and its interface with the load bearing device 308.

In Figures 8A, 8C and 8E, similar to the embodiment of Figure 1, the car body 302 comprises two adjacent load bearing devices 308 and 310, while, in Figures 8B, 8D and 8F, similar to the embodiment of Figure 6, the car body 302 comprises one load bearing device 308 that is symmetric to the central longitudinal plane of the car body 302.

In Figure 8A the trapezoid longitudinal beam 309 is a welded component made of three sheet metal (partially cold formed) plates extending in the longitudinal direction and a plurality of transverse stiffening ribs 309.2. The components of the load bearing devices 308 and 310 are also connected to the longitudinal beam 309 in a welding process. The floor 303.1 is supported, both, on the longitudinal beam 309 and the load bearing devices 308 and 310.

In Figure 8B a tubular longitudinal beam 309 is provided. The load bearing device 308 has a recessed central portion through which the longitudinal beam 309 extends. The load bearing device 308 is connected to the longitudinal beam 309 in a welding process. The floor 303.1 is supported on the load bearing device 308.

In Figure 8C the longitudinal beam 309 is a HEA profile extending in the longitudinal direction. The components of the load bearing devices 308 and 310 are connected to the longitudinal beam 309 in a welding process. The floor 303.1 is supported, both, on the longitudinal beam 309 and the load bearing devices 308 and 310.

In Figure 8D a substantially U-shaped longitudinal beam 309 is provided. The longitudinal beam 309 is internally reinforced by reinforcement ribs 309.2 provided in the contact area with the load bearing device 308. The load bearing device 308 has a recessed central portion through which the longitudinal beam 309 extends. The load bearing device 308 and the reinforcement ribs 309.2 are connected to the longitudinal beam 309 in a welding process. The floor 303.1 is supported on the load bearing device 308.

In Figure 8E the longitudinal beam 309 comprises two IPE profiles extending in the longitudinal direction and locally connected via ribs 309.2. The components of the load bearing devices 308 and 310 are connected to the longitudinal beam 309 in a welding process. The floor 303.1 is supported, both, on the longitudinal beam 309 and the load bearing devices 308 and 310.

In Figure 8F the longitudinal beam 309 comprises two rolled and substantially U-shaped profiles extending in the longitudinal direction and locally connected via ribs 309.2. The load bearing device 308 has a recessed central portion through which the longitudinal beam 309 extends. The load bearing device 308 and the ribs 309.2 are connected to the profiles of the longitudinal beam 309 in a welding process. The floor 303.1 is supported on the load bearing device 308.

Although the invention in the foregoing has only been described in the context of car bodies where the components have mainly been connected by welding connections, it will be appreciated that any other suitable technique of connecting such components or a combination of such techniques may be applied.

Furthermore, the invention in the foregoing has only been described in the context of passenger transport. However, it will be appreciated that the invention may also be applied with any other vehicles relating to the transport of goods.

Finally, the invention in the foregoing has only been described in the context of rail vehicles. However, it will be appreciated that the invention may also be applied with any other vehicles.

## Claims

1. Car body for a vehicle, in particular a rail vehicle, comprising:
- a transport compartment (5; 105; 205) having a longitudinal axis (5.1; 105.1; 205.1),
- an underframe structure (3; 103; 203) forming a bottom of said transport compartment (5; 105; 205),
- a first side wall structure (4; 104; 204) forming a first side wall of said transport compartment (5; 105; 205), and
- a first load bearing device (8; 108; 208; 308) forming part of said first side wall structure (4; 104; 204) and being adapted to bear the loads introduced via a first carrier structure (7; 107; 207), said first carrier structure (7; 107; 207) being a passenger seat carrier structure removably mounted on said first side wall structure (4; 104; 204) within said transport compartment (5; 105; 205),
- said first load bearing device (8; 108; 208; 308) comprising at least one angled traverse (8.4, 8.5; 108.4, 108.5; 208.4, 208.5), and
- said angled traverse (8.4, 8.5; 108.4, 108.5; 208.4, 208.5; 308.4), in a transverse plane extending transverse to said longitudinal axis (5.1; 105.1; 205.1), extending within said underframe structure (3; 103; 203) and within said first side wall structure (4; 104; 204),
**characterized in that**
- said angled traverse (8.4, 8.5; 108.4, 108.5; 208.4, 208.5) is a monolithic element.

2. Car body according to claim 1, **characterized in that** said first load bearing device (8; 108; 208; 308) comprises a first interface (8.1; 108.1; 208.1) for said first carrier structure.

3. Car body according to claim 2, **characterized in that**
- said bottom defines a bottom level of said transport compartment (5; 105; 205) and
- said first interface (8.1; 108.1; 208.1) is located above said bottom level.

4. Car body according to any one of the preceding claims, **characterized in that**
- said bottom defines a bottom level of said transport compartment (5; 105; 205) and
- said traverse (8.4, 8.5; 108.4, 108.5; 208.4, 208.5; 308.4) has a first traverse part (8.2) extending within said first side wall structure (4; 104; 204);
- said first traverse part (8.2) having a first end (8.6) located above said bottom level.

5. Car body according to claim 4, **characterized in that**
- a roof structure is provided,
- said roof structure forming a roof of said transport compartment (5; 105; 205) and defining a roof level of said transport compartment (5; 105; 205),
- said first end (8.6; 108.6) of said first traverse part (8.2) being located below said roof level.

6. Car body according to claim 4 or 5, **characterized in that**
- said first load bearing device (8; 108; 208; 308) comprises a first interface (8.1; 108.1; 208.1) for said first carrier structure (7; 107; 207) located above said bottom level;
- said first end (8.6; 108.6) of said first traverse part (8.2) being located in the area of said first interface (8.1; 108.1; 208.1).

7. Car body according to any one of the preceding claims, **characterized in that**
- said first carrier structure (7; 107; 207) is removably connected to said first load bearing device (8; 108; 208; 308),
- said first load bearing device (8; 108; 208; 308) forming the single support to said first carrier structure (7; 107; 207).

8. Car body according to claim 7, **characterized in that** said first carrier structure (7; 107; 207) comprises at least one first carrier beam (7.1; 107.1, 107.2; 207.1) connected to said first load bearing device (8; 108; 208; 308).

9. Car body according to any one of the preceding claims, **characterized in that** a passenger seat structure (6; 106; 206) is mounted to said first carrier structure (7; 107; 207).

10. Car body according to claim 9, **characterized in that** said passenger seat structure (6; 106; 206) comprises at least three passenger seats in a row, in particular at least six seats in two rows.

11. Car body according to any one of the preceding claims, **characterized in that**
- said traverse (8.4, 8.5; 108.4, 108.5; 208.4, 208.5; 308.4) comprises at least one substantially planar web (8.8; 208.8) element,
- said web element (8.8; 208.8) extending substantially parallel to said transverse plane.

12. Car body according to claim 11, **characterized in that**
- said traverse (8.4, 8.5; 108.4, 108.5; 208.4, 208.5; 308.4) comprises at least one substantially planar ridge element (8.9, 8.10; 208.9);
- said ridge element (8.9, 8.10; 208.9) being connected to said web element (8.8; 208.8) and extending transverse to said web element (8.8; 208.8).

13. Car body according to claim 12, **characterized in that** said at least one ridge element (8.9, 8.10; 208.9) forms a support for a floor structure (3.1; 203.1) of said underframe structure (3; 103; 203) or for a lower shell structure (3.2) of said underframe structure (3; 103; 203).

14. Car body according to any one of claims 11 to 13, **characterized in that**
- said traverse (8.4, 8.5; 108.4, 108.5; 208.4, 208.5; 308.4) comprises at least two substantially planar web elements (8.8; 208.8),
- said planar web elements (8.8; 208.8) being spaced along said longitudinal axis (5.1; 105.1; 205.1).

15. Car body according to claim 14, **characterized in that**
- said first load bearing device (8; 108; 208; 308) comprises a first interface (8.1; 108.1; 208.1) for said first carrier structure (7; 107; 207);
- said at least two planar web elements (8.8; 208.8) being connected at least in the area of said first interface (8.1; 108.1; 208.1).

16. Car body according to any one of the preceding claims, **characterized in that**
- said first side wall structure (4; 104; 204) comprises at least one shell structure (4.1; 104.1; 204.1);
- said shell structure (4.1; 104.1; 204.1) forming a surface of said first side wall structure (4; 104; 204) and being mounted to said traverse (8.4, 8.5; 108.4, 108.5; 208.4, 208.5; 308.4).

17. Car body according to any one of the preceding claims, **characterized in that**
- said transport compartment (5; 105; 205) has a transverse axis (5.2; 105.2; 205.2) extending transverse to said longitudinal axis (5.1; 105.1; 205.1) and
- said underframe structure (3; 103; 203) comprises an elongated longitudinal support structure (9; 109; 209; 309);
- said longitudinal support structure (9; 109; 209; 309) extending substantially parallel to said longitudinal axis (5.1; 105.1; 205.1) and being spaced from said first side wall structure (4; 104; 204) along said transverse axis (5.2; 105.2; 205.2);
- said first load bearing device (8; 108; 208; 308) being connected to said longitudinal support structure (9; 109; 209; 309).

18. Car body according to claim 17, **characterized in that** said longitudinal support structure comprises at least one longitudinal beam (9; 109; 209; 309).

19. Car body according to claim 17 or 18, **characterized in that**
- said transport compartment (5; 105; 205) has a central longitudinal plane and
- said longitudinal support structure (9; 109; 209; 309) extends within said central longitudinal plane.

20. Car body according to any one of claims 17 to 19, **characterized in that**
- said traverse (8.4, 8.5; 108.4, 108.5; 208.4, 208.5) comprises at least one substantially planar web element (8.8; 208.8),
- said web element (8.8; 208.8) extending substantially parallel to said transverse plane and being received within a recess (9.1; 109.1; 209.1) of said longitudinal support structure.

21. Car body according to any one of claims 17 to 20, **characterized in that** said traverse (208.4, 208.5; 308.4), along said transverse axis, extends on both sides of said longitudinal support structure (209; 309).

22. Car body according to any one of the preceding claims, **characterized in that**
- a second side wall structure is provided;
- said second side wall forming a second side wall of said transport compartment opposite to said first side wall,
- said first load bearing device (208; 308) extending within said second side wall structure and being adapted to bear the loads introduced via a second carrier structure arranged within said transport compartment (205)
or
- a second load bearing device (10; 110; 310) being provided adjacent to said first load bearing device (8; 108; 308) and extending within said second side wall structure, said second load bearing device (10; 110; 310) being adapted to bear the loads introduced via a second carrier structure arranged within said transport compartment (5; 105).

23. Car body according to any one of the preceding claims, **characterized in that** a plurality of first load bearing devices (8; 108; 208; 308) is provided, said first load bearing (8; 108; 208; 308) devices being mutually spaced apart along said longitudinal axis (5.1; 105.1; 205.1).

24. Vehicle, in particular rail vehicle, comprising a car body (2; 102; 202; 302) according to any one of claims 1 to 23.

## Patentansprüche

1. Wagenkasten für ein Fahrzeug, insbesondere ein Schienenfahrzeug, umfassend:
- einen Transportraum (5; 105; 205), der eine Längsachse (5.1; 105.1; 205.1) aufweist,
- eine Unterrahmenstruktur (3; 103; 203), die einen Boden des Transportraums (5; 105; 205) bildet,
- eine erste Seitenwandstruktur (4; 104; 204), die eine erste Seitenwand des Transportraums (5; 105; 205) bildet, und
- eine erste lasttragende Vorrichtung (8; 108; 208; 308), die Teil der ersten Seitenwandstruktur (4; 104; 204) bildet und zum Tragen der Lasten ausgebildet ist, welche über eine erste Trägerstruktur (7; 107; 207) eingeführt werden, wobei die erste Trägerstruktur (7; 107; 207) eine FahrgastsitzTrägerstruktur ist, die abnehmbar an der ersten Seitenwandstruktur (4; 104; 204) in dem Transportraum (5; 105; 205) montiert ist,
- wobei die erste lasttragende Vorrichtung (8; 108; 208; 308) wenigstens eine abgewinkelte Traverse (8.4, 8.5; 108.4, 108.5; 208.4, 208.5) aufweist und
- die abgewinkelte Traverse (8.4, 8.5; 108.4, 108.5; 208.4, 208.5; 308.4) in einer quer zu der Längsachse (5.1; 105.1; 205.1) verlaufenden Querebene in der Unterrahmenstruktur (3; 103; 203) und in der ersten Seitenwandstruktur (4; 104; 204) verläuft,
**dadurch gekennzeichnet, dass**
- die abgewinkelte Traverse (8.4, 8.5; 108.4, 108.5; 208.4, 208.5) ein monolithisches Element ist.

2. Wagenkasten nach Anspruch 1, **dadurch gekennzeichnet, dass** die erste lasttragende Vorrichtung (8; 108; 208; 308) eine erste Verbindungsstelle (8.1; 108.1; 208.1) für die erste Trägerstruktur aufweist.

3. Wagenkasten nach Anspruch 2, **dadurch gekennzeichnet, dass**
- der Boden ein Bodenniveau des Transportraums (5; 105; 205) definiert und
- sich die erste Verbindungsstelle (8.1; 108.1; 208.1) oberhalb des Bodenniveaus befindet.

4. Wagenkasten nach einem der vorhergehenden Ansprüche, **dadurch gekennzeichnet, dass**
- der Boden ein Bodenniveau des Transportraums (5; 105; 205) definiert und
- die Traverse (8.4, 8.5; 108.4, 108.5; 208.4, 208.5; 308.4) einen ersten Traversenteil (8.2) hat, der in der ersten Seitenwandstruktur (4; 104; 204) verläuft,
- der erste Traversenteil (8.2) ein erstes Ende (8.6) hat, das sich oberhalb des Bodenniveaus befindet.

5. Wagenkasten nach Anspruch 4, **dadurch gekennzeichnet, dass**
- eine Dachstruktur vorgesehen ist,
- die Dachstruktur ein Dach des Transportraums (5; 105; 205) bildet und ein Dachniveau des Transportraums (5; 105; 205) definiert, wo
- sich das erste Ende (8.6; 108.6) des ersten Traversenteils (8.2) unterhalb des Dachniveaus befindet.

6. Wagenkasten nach Anspruch 4 oder 5, **dadurch gekennzeichnet, dass**
- die erste lasttragende Vorrichtung (8; 108; 208, 308) eine erste Verbindungsstelle (8.1; 108.1; 208.1) für die erste Trägerstruktur (7; 107; 207) aufweist, die sich oberhalb des Bodenniveaus befindet, wobei
- sich das erste Ende (8.6; 108.6) des ersten Traversenteils (8.2) in dem Bereich der ersten Verbindungsstelle (8.1; 108.1; 208.1) befindet.

7. Wagenkasten nach einem der vorhergehenden Ansprüche, **dadurch gekennzeichnet, dass**
- die erste Trägerstruktur (7; 107; 207) abnehmbar mit der ersten lasttragenden Vorrichtung (8; 108; 208; 308) verbunden ist, wobei
- die erste lasttragende Vorrichtung (8; 108; 208; 308) die einzige Abstützung für die erste Trägerstruktur (7; 107; 207) bildet.

8. Wagenkasten nach Anspruch 7, **dadurch gekennzeichnet, dass** die erste Trägerstruktur (7; 107; 207) wenigstens ein erstes Trägerprofil (7.1; 107.1, 107.2; 207.1) aufweist, das mit der ersten lasttragenden Vorrichtung (8; 108; 208; 308) verbunden ist.

9. Wagenkasten nach einem der vorhergehenden Ansprüche, **dadurch gekennzeichnet, dass** an der ersten Trägerstruktur (7; 107; 207) eine Fahrgastsitzstruktur (6; 106; 206) montiert ist.

10. Wagenkasten nach Anspruch 9, **dadurch gekennzeichnet, dass** die Fahrgastsitzstruktur (6; 106; 206) wenigstens drei Fahrgastsitze in einer Reihe, insbesondere wenigstens sechs Sitze in zwei Reihen aufweist.

11. Wagenkasten nach einem der vorhergehenden Ansprüche, **dadurch gekennzeichnet, dass**
- die Traverse (8.4, 8.5; 108.4, 108.5; 208.4, 208.5; 308.4) wenigstens ein im Wesentlichen ebenes Stegelement (8.8; 208.8) aufweist, wobei
- das Stegelement (8.8; 208.8) im Wesentlichen parallel zur Querebene verläuft.

12. Wagenkasten nach Anspruch 11, **dadurch gekennzeichnet, dass**
- die Traverse (8.4, 8.5; 108.4, 108.5; 208.4, 208.5; 308.4) wenigstens ein im Wesentlichen ebenes Bandelement (8.9, 8.10; 208.9) aufweist, wobei
- das Bandelement (8.9, 8.10; 208.9) mit dem Stegelement (8.8; 208.8) verbunden ist und quer zu dem Stegelement (8.8; 208.8) verläuft.

13. Wagenkasten nach Anspruch 12, **dadurch gekennzeichnet, dass** das wenigstens eine Bandelement (8.9, 8.10; 208.9) eine Abstützung für eine Bodenstruktur (3.1; 203.1) der Unterrahmenstruktur (3; 103; 203) oder für eine untere Schalenstruktur (3.2) der Unterrahmenstruktur (3; 103; 203) bildet.

14. Wagenkasten nach einem der Ansprüche 11 bis 13, **dadurch gekennzeichnet, dass**
- die Traverse (8.4, 8.5; 108.4, 108.5; 208.4, 208.5; 308.4) wenigstens zwei im Wesentlichen ebene Stegelemente (8.8; 208.8) aufweist, wobei
- die ebenen Stegelemente (8.8; 208.8) an der Längsachse (5.1; 105.1; 205.1) entlang mit Zwischenraum zueinander angeordnet sind.

15. Wagenkasten nach Anspruch 14, **dadurch gekennzeichnet, dass**
- die erste lasttragende Struktur (8; 108; 208; 308) eine erste Verbindungsstelle (8.1; 108.1; 208.1) für die erste Trägerstruktur (7; 107; 207) aufweist,
- die wenigstens zwei ebenen Stegelemente (8.8; 208.8) zumindest im Bereich der ersten Verbindungsstelle (8.1; 108.1; 208.1) verbunden sind.

16. Wagenkasten nach einem der vorhergehenden Ansprüche, **dadurch gekennzeichnet, dass**
- die erste Seitenwandstruktur (4; 104; 204) wenigstens eine Schalenstruktur (4.1; 104.1; 204.1) aufweist,
- die Schalenstruktur (4.1; 104.1; 204.1) eine Oberfläche der ersten Seitenwandstruktur (4; 104; 204) bildet und an der Traverse (8.4, 8.5; 108.4, 108.5; 208.4, 208.5; 308.4) montiert ist.

17. Wagenkasten nach einem der vorhergehenden Ansprüche, **dadurch gekennzeichnet, dass**
- der Transportraum (5; 105; 205) eine Querachse (5.2; 105.2; 205.2) aufweist, die quer zu der Längsachse (5.1; 105.1; 205.1) verläuft, und
- die Unterrahmenstruktur (3; 103; 203) eine langgestreckte Längsstützstruktur (9; 109; 209; 309) aufweist,
- die Längsstützstruktur (9; 109; 209; 309) im Wesentlichen parallel zur Längsachse (5.1; 105.1; 205.1) verläuft und entlang der Querachse (5.2; 105.2; 205.2) von der ersten Seitenwandstruktur (4; 104; 204) beabstandet ist,
- die erste lasttragende Vorrichtung (8; 108; 208; 308) mit der Längsstützstruktur (9; 109; 209; 309) verbunden ist.

18. Wagenkasten nach Anspruch 17, **dadurch gekennzeichnet, dass** die Längsstützstruktur wenigstens ein Längsprofil (9; 109; 209; 309) aufweist.

19. Wagenkasten nach Anspruch 17 oder 18, **dadurch gekennzeichnet, dass**
- der Transportraum (5; 105; 205) eine zentrale Längsebene aufweist und
- sich die Längsstützstruktur (9; 109; 209; 309) in der zentralen Längsebene erstreckt.

20. Wagenkasten nach einem der Ansprüche 17 bis 19, **dadurch gekennzeichnet, dass**
- die Traverse (8.4, 8.5; 108.4, 108.5; 208.4, 208.5) wenigstens ein im Wesentlichen ebenes Stegelement (8.8; 208.8) aufweist,
- das Stegelement (8.8; 208.8) im Wesentlichen parallel zur Querebene verläuft und in einer Aussparung (9.1; 109.1; 209.1) der Längsstützstruktur aufgenommen ist.

21. Wagenkasten nach einem der Ansprüche 17 bis 20, **dadurch gekennzeichnet, dass** die Traverse (208.4, 208.5; 308.4) entlang der Längsachse auf beiden Seiten der Längsstützstruktur (209; 309) verläuft.

22. Wagenkasten nach einem der vorhergehenden Ansprüche, **dadurch gekennzeichnet, dass**
- eine zweite Seitenwandstruktur bereitgestellt ist,
- die zweite Seitenwandstruktur eine zweite Seitenwand des Transportraums bildet, die der ersten Seitenwand gegenüberliegt, wobei
- die erste lasttragende Vorrichtung (208; 308) in der zweiten Seitenwandstruktur verläuft und zum Tragen der Lasten ausgeführt ist, die über eine zweite Trägerstruktur eingeführt werden, die in dem Transportraum (205) angeordnet ist,
oder
- eine zweite lasttragende Vorrichtung (10; 110; 310) vorgesehen ist, die an die erste lasttragenden Vorrichtung (8; 108; 308) angrenzt und in der zweiten Seitenwandstruktur verläuft, wobei die zweite lasttragende Vorrichtung (10; 110; 310) zum Tragen der Lasten ausgeführt ist, die über eine zweite Trägerstruktur eingeführt werden, die in dem Transportraum (5; 105) angeordnet ist.

23. Wagenkasten nach einem der vorhergehenden Ansprüche, **dadurch gekennzeichnet, dass** eine Vielzahl von ersten lasttragenden Vorrichtungen (8; 108; 208; 308) vorgesehen ist, wobei die ersten lasttragenden (8; 108; 208; 308) Vorrichtungen entlang der Längsachse (5.1; 105.1; 205.1) voneinander beabstandet sind.

24. Fahrzeug, insbesondere Schienenfahrzeug, das einen Wagenkasten (2; 102; 202; 302) nach einem der Ansprüche 1 bis 23 aufweist.

## Revendications

1. Carrosserie de véhicule, en particulier de véhicule ferroviaire, comprenant :
- un compartiment de transport (5; 105; 205) ayant un axe longitudinal (5.1; 105.1; 205.1),
- une structure de châssis basse (3; 103; 203) formant un fond dudit compartiment de transport (5; 105; 205),
- une première structure de paroi latérale (4; 104; 204) formant une première paroi latérale dudit compartiment de transport (5; 105; 205), et
- un premier dispositif porteur (8; 108; 208; 308) faisant partie de ladite première structure de paroi latérale (4; 104; 204) et configurée pour supporter les charges introduites par une première structure porteuse (7; 107; 207), ladite première structure porteuse (7; 107; 207) étant une structure porteuse de siège de passager fixée de manière amovible à ladite première structure de paroi latérale (4; 104; 204) dans ledit compartiment de transport (5; 105; 205),
- ledit premier dispositif porteur (8; 108; 208; 308) comprenant au moins une traverse pliée (8.4, 8.5; 108.4, 108.5; 208.4, 208.5), et
- ladite traverse pliée (8.4, 8.5; 108.4, 108.5; 208.4, 208.5; 308.4), dans un plan transversal s'étendant transversalement audit axe longitudinal (5.1; 105.1; 205.1), s'étendant dans ladite structure de châssis basse (3; 103; 203) et dans ladite première structure de paroi latérale (4; 104; 204),
**caractérisée en ce que**
- ladite traverse pliée (8.4, 8.5; 108.4, 108.5; 208.4, 208.5) est un élément monolithique.

2. Carrosserie selon la revendication 1, **caractérisée en ce que** ledit premier dispositif porteur (8; 108; 208; 308) comprend une première interface (8.1; 108.1; 208.1) pour ladite première structure porteuse.

3. Carrosserie selon la revendication 2, **caractérisée en ce que**
- ledit fond définit un niveau de fond dudit compartiment de transport (5; 105; 205), et
- ladite première interface (8.1; 108.1; 208.1) se trouve au-dessus dudit niveau de fond.

4. Carrosserie selon l'une quelconque des revendications précédentes, **caractérisée en ce que**
- ledit fond définit un niveau de fond dudit compartiment de transport (5; 105; 205), et
- ladite traverse (8.4, 8.5; 108.4, 108.5; 208.4, 208.5; 308.4) comporte une première partie de traverse (8.2) s'étendant dans ladite première structure de paroi latérale (4; 104; 204);
- ladite première partie de traverse (8.2) ayant une première extrémité (8.6) se trouvant au-dessus dudit niveau de fond.

5. Carrosserie selon la revendication 4, **caractérisée en ce que**
- une structure de toit est prévue,
- ladite structure de toit formant un toit dudit compartiment de transport (5; 105; 205) et définissant un niveau de toit dudit compartiment de transport (5; 105; 205),
- ladite première extrémité (8.6; 108.6) de ladite première partie de traverse (8.2) se trouvant en dessous dudit niveau de toit.

6. Carrosserie selon la revendication 4 ou 5, **caractérisée en ce que**
- ledit premier dispositif porteur (8; 108; 208; 308) comprend une première interface (8.1; 108.1; 208.1) pour ladite première structure porteuse (7; 107; 207) se trouvant au-dessus dudit niveau de fond;
- ladite première extrémité (8.6; 108.6) de ladite première partie de traverse (8.2) se trouvant à proximité de ladite première interface (8.1; 108.1; 208.1).

7. Carrosserie selon l'une quelconque des revendications précédentes, **caractérisée en ce que**
- ladite première structure porteuse (7; 107; 207) est reliée de manière amovible audit premier dispositif porteur (8; 108; 208; 308),
- ledit premier dispositif porteur (8; 108; 208; 308) formant le seul support de ladite première structure porteuse (7; 107; 207).

8. Carrosserie selon la revendication 7, **caractérisée en ce que** ladite première structure porteuse (7; 107; 207) comprend au moins une première poutre porteuse (7.1; 107.1, 107.2; 207.1) reliée audit premier dispositif porteur (8; 108; 208; 308).

9. Carrosserie selon l'une quelconque des revendications précédentes, **caractérisée en ce qu'**une structure de siège de passager (6; 106; 206) est fixée à ladite première structure porteuse (7; 107; 207).

10. Carrosserie selon la revendication 9, **caractérisée en ce que** ladite structure de siège de passager (6; 106; 206) comprend au moins une rangée de trois sièges passagers, en particulier au moins deux rangées de six sièges.

11. Carrosserie selon l'une quelconque des revendications précédentes, **caractérisée en ce que**
- ladite traverse (8.4, 8.5; 108.4, 108.5; 208.4, 208.5; 308.4) comprend au moins un élément d'âme essentiellement plan (8.8; 208.8),
- ledit élément d'âme (8.8; 208.8) s'étendant essentiellement parallèlement audit plan transversal.

12. Carrosserie selon la revendication 11, **caractérisée en ce que**
- ladite traverse (8.4, 8.5; 108.4, 108.5; 208.4, 208.5; 308.4) comprend au moins un élément de crête essentiellement plan (8.9; 8.10;208.9);
- ledit élément de crête (8.9; 8.10; 208.9) étant relié audit élément d'âme (8.8; 208.8) et s'étendant transversalement audit élément d'âme (8.8; 208.8).

13. Carrosserie selon la revendication 12, **caractérisée en ce que** ledit au moins un élément de crête (8.9; 8.10; 208.9) forme un support pour une structure de plancher (3.1; 203.1) de ladite structure de châssis basse (3; 103; 203) ou pour une structure de coque inférieure (3.2) de ladite structure de châssis basse (3; 103; 203).

14. Carrosserie selon l'une quelconque des revendications 11 à 13, **caractérisée en ce que**
- ladite traverse (8.4, 8.5; 108.4, 108.5; 208.4, 208.5; 308.4) comprend au moins deux éléments d'âme essentiellement plans (8.8; 208.8),
- lesdits au moins deux éléments d'âme plans (8.8; 208.8) étant espacés le long dudit axe longitudinal (5.1; 105.1; 205.1).

15. Carrosserie selon la revendication 14, **caractérisée en ce que**
- ledit premier dispositif porteur (8; 108; 208; 308) comprend une première interface (8.1; 108.1; 208.1) pour ladite première structure porteuse (7; 107; 207);
- lesdits au moins deux éléments d'âme plans (8.8; 208.8) étant reliés au moins à proximité de ladite première interface (8.1; 108.1; 208.1).

16. Carrosserie selon l'une quelconque des revendications précédentes, **caractérisée en ce que**
- ladite première structure de paroi latérale (4; 104; 204) comprend au moins une structure de coque (4.1; 104.1; 204.1);
- ladite structure de coque (4.1; 104.1; 204.1) formant une surface de ladite première structure de paroi latérale (4; 104; 204) et étant fixée à ladite traverse (8.4, 8.5; 108.4, 108.5; 208.4, 208.5; 308.4).

17. Carrosserie selon l'une quelconque des revendications précédentes, **caractérisée en ce que**
- ledit compartiment de transport (5; 105; 205) a un axe transversal (5.2; 105.2; 205.2) s'étendant transversalement audit axe longitudinal (5.1; 105.1; 205.1) et
- ladite structure de châssis basse (3; 103; 203) comprend une structure de support longitudinale allongée (9; 109; 209; 309);
- ladite structure de support longitudinale (9; 109; 209; 309) s'étendant essentiellement parallèlement audit axe longitudinal (5.1; 105.1; 205.1) et étant espacée de ladite première structure de paroi latérale (4; 104; 204) le long dudit axe transversal (5.2; 105.2; 205.2);
- ledit premier dispositif porteur (8; 108; 208; 308) étant relié à ladite structure de support longitudinale (9; 109; 209; 309).

18. Carrosserie selon la revendication 17, **caractérisée en ce que** ladite structure de support longitudinale comprend au moins une poutre longitudinale (9; 109; 209; 309).

19. Carrosserie selon la revendication 17 ou 18, **caractérisée en ce que**
- ledit compartiment de transport (5; 105; 205) a un plan longitudinal central, et
- ladite structure de support longitudinale (9; 109; 209; 309) s'étend dans ledit plan longitudinal central.

20. Carrosserie selon l'une quelconque des revendications 17 à 19, **caractérisée en ce que**
- ladite traverse (8.4, 8.5; 108.4, 108.5; 208.4; 208.5) comprend au moins un élément d'âme essentiellement plan (8.8; 208.8),
- ledit élément d'âme (8.8; 208.8) s'étendant essentiellement parallèlement audit plan transversal et étant logé dans un renfoncement (9.1; 109.1; 209.1) de ladite structure de support longitudinale.

21. Carrosserie selon l'une quelconque des revendications 17 à 20, **caractérisée en ce que** ladite traverse (208.4, 208.5; 308.4), le long dudit axe transversal, s'étend des deux côtés de ladite structure de support longitudinale (209; 309).

22. Carrosserie selon l'une quelconque des revendications précédentes, **caractérisée en ce que**
- une deuxième structure de paroi latérale est prévue;
- ladite deuxième paroi latérale formant une deuxième paroi latérale dudit compartiment de transport, opposée à ladite première paroi latérale,
- ledit premier dispositif porteur (208; 308) s'étendant dans ladite deuxième structure de paroi latérale et étant configurée pour supporter les charges introduites par une deuxième structure porteuse disposée dans ledit compartiment de transport (205)
ou
- un deuxième dispositif porteur (10; 110; 310) étant prévu à côté dudit premier dispositif porteur (8; 108; 308) et s'étendant dans ladite deuxième structure de paroi latérale, ledit deuxième dispositif porteur (10; 110; 310) étant configurée pour supporter les charges introduites par une deuxième structure porteuse disposée dans ledit compartiment de transport (5; 105).

23. Carrosserie selon l'une quelconque des revendications précédentes, **caractérisée en ce qu'**une pluralité de premiers dispositifs porteurs (8; 108; 208; 308) est prévue, lesdits premiers dispositifs porteurs (8; 108; 208; 308) étant espacés les uns des autres le long dudit axe longitudinal (5.1; 105.1; 205.1).

24. Véhicule, en particulier véhicule ferroviaire, comprenant une carrosserie (2; 102; 202; 302) selon l'une quelconque de
